(19) Europäisches Patentamt / European Patent Office / Office européen des brevets

(11) **EP 3 739 811 B1**

(12) **EUROPEAN PATENT SPECIFICATION**

(45) Date of publication and mention
of the grant of the patent:
**29.11.2023 Bulletin 2023/48**

(21) Application number: **19778023.2**

(22) Date of filing: **25.03.2019**

(51) International Patent Classification (IPC):
**H04L 41/16** *(2022.01)*

(52) Cooperative Patent Classification (CPC):
**H04L 41/16; G06F 18/00**

(86) International application number:
**PCT/CN2019/079429**

(87) International publication number:
**WO 2019/184836 (03.10.2019 Gazette 2019/40)**

(54) **DATA ANALYSIS DEVICE, AND MULTI-MODEL CO-DECISION SYSTEM AND METHOD**

DATENANALYSEVORRICHTUNG UND MEHRMODELL-CO-ENTSCHEIDUNGSSYSTEM UND -VERFAHREN

DISPOSITIF D'ANALYSE DE DONNÉES ET PROCÉDÉ ET SYSTÈME DE CODÉCISION MULTIMODÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2018 CN 201810310789**

(43) Date of publication of application:
**18.11.2020 Bulletin 2020/47**

(73) Proprietor: **HUAWEI TECHNOLOGIES CO., LTD.
Shenzhen, Guangdong 518129 (CN)**

(72) Inventors:
• **XU, Yixu
  Shenzhen, Guangdong 518129 (CN)**
• **WU, Zhongyao
  Shenzhen, Guangdong 518129 (CN)**
• **WANG, Yuanyuan
  Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A1-2009/001140       CN-A- 103 258 212
CN-A- 104 572 786        CN-A- 106 294 654
CN-A- 106 446 005        CN-A- 106 529 816
US-A1- 2017 026 888      US-A1- 2018 005 134
US-A1- 2018 032 908**

EP 3 739 811 B1

## Description

This application claims priority to Chinese Patent Application No. 201810310789.9, filed with the Chinese Patent Office on March 30, 2018 and entitled "DATA ANALYSIS DEVICE AND MULTI-MODEL CO-DECISION-MAKING SYSTEM AND METHOD".

## TECHNICAL FIELD

This application relates to the field of communications technologies, and in particular, to a data analysis device and a multi-model co-decision-making system and method.

## BACKGROUND

With the rapid development of communications technologies, a user can use increasing radio access technologies, for example, 2G, 3G, 4G, wireless fidelity (wireless-fidelity, Wi-Fi), and 5G that is developing rapidly. Compared with an earlier 2G network that mainly provides a voice service, current various types of access technologies cause network behavior and performance factors in a wireless network more unpredictable. To improve utilization of wireless network resources and flexibly respond to changes in transmission and service requirements of the wireless network, artificial intelligence and machine learning technologies have developed rapidly, and provide a basis for improving data analysis capabilities in terms of network resource usage, response to the changes in the transmission and service requirements, and the like of the current wireless network.

Machine learning means that a rule is obtained by analyzing data and experience, and then unknown data is predicted by using the rule. Common machine learning mainly includes four steps: data collection, data preprocessing and feature engineering, training, and a prediction. In a training process, a machine learning model is generated after training of a single training algorithm is completed. New sample data is predicted based on the training model, to obtain a corresponding specific data value or a specific classification result. To be specific, when a manner of the machine learning is applied to a wireless network, only one machine learning model can be used to perform a prediction for one communication service.

US2018005134A1 discloses an electronic device to determine whether a machine-learning model is operating within predefined limits. Based on instructions for the machine-learning model, a reference input and a predetermined output of the machine-learning model for the reference input, wherein the instructions may include an architecture of the machine-learning model, weights associated with the machine-learning model and/or a set of pre-processing transformations for use when executing the machine-learning model on images. The electronic device configures the machine-learning model based on the instructions and calculates an output of the machine-learning model for the reference input, to determine whether the machine-learning model is operating within predefined limits based on the output and the predetermined output.

However, if one model supported by an existing solution is used for a prediction, an accurate prediction result cannot be obtained, affecting a decision on a service.

## SUMMARY

In view of this, embodiments of this application provide a data analysis device and a multi-model co-decision-making system and method, to improve accuracy of a prediction result.

The scope of the invention is set out in the appended claims. The following technical solutions are provided in the embodiments of this application.

A first aspect of the embodiments of this application provides a data analysis device, as defined by the appended independent claim 1.

In a possible design, the processor is further configured to: obtain statistical information through the communications interface, where the statistical information includes an identifier of the primary model, a total quantity of prediction times of model predictions performed by each learning model within a preset time interval, a prediction result of each prediction performed by each learning model, and a final prediction result of each prediction.

In a possible design, the installation message further includes first periodicity information, the first periodicity information is used to indicate a feedback periodicity for the another data analysis device to feed back the statistical information, and the preset time interval is the same as the feedback periodicity.

In a possible design, the processor is configured to send a request message to the another data analysis device through the communications interface, where the request message is used to request to subscribe to a feature vector, the request message includes second periodicity information, and the second periodicity information is used to indicate a collection periodicity for collecting data related to the feature vector.

In a possible design, the data analysis device is a radio access network data analysis network element or a network data analysis network element.

A second aspect of the embodiments of this application provides a multi-model co-decision-making method, as defined by the appended independent claim 6.

A third aspect of the embodiments of this application provides a computer-readable storage medium, as defined by the appended independent claim 7. aspects.

**BRIEF DESCRIPTION OF DRAWINGS**

To describe the technical solutions in embodiments of this application or in the prior art more clearly, the following briefly describes the accompanying drawings for describing the embodiments or the prior art. Clearly, the accompanying drawings in the following description show merely the embodiments of this application, and persons of ordinary skill in the art may still derive other drawings from these accompanying drawings without creative efforts.

FIG. 1 is a schematic structural diagram of a radio access network according to an embodiment of this application;
FIG. 2 shows a structure of a core network according to an embodiment of this application;
FIG. 3 is a schematic structural diagram of a multi-model co-decision-making system according to an embodiment of this application;
FIG. 4 is a schematic structural diagram of another multi-model co-decision-making system according to an embodiment of this application;
FIG. 5 is a schematic flowchart of a multi-model co-decision-making method according to an embodiment of this application;
FIG. 6 is a schematic flowchart of another multi-model co-decision-making method according to an embodiment of this application;
FIG. 7 is a schematic structural diagram of a multi-model co-decision-making system according to an embodiment of this application;
FIG. 8 is a schematic structural diagram of a first data analysis device according to an embodiment of this application; and
FIG. 9 is a schematic structural diagram of a second data analysis device according to an embodiment of this application.

**DESCRIPTION OF EMBODIMENTS**

The following clearly and completely describes the technical solutions in embodiments of this application with reference to the accompanying drawings in the embodiments of this application.

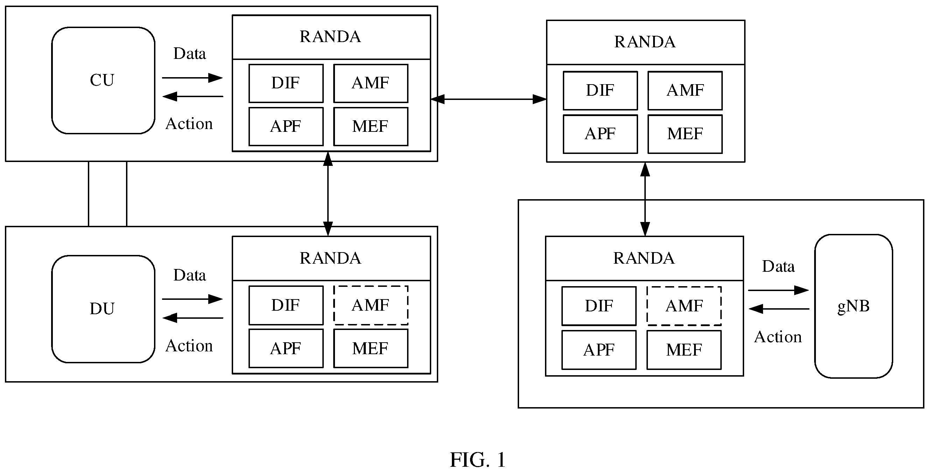

FIG. 1 is a schematic structural diagram of a radio access network (Radio Access Network, RAN) according to an embodiment of this application.

The radio access network includes a RAN data analysis (RAN data analysis, RANDA) network element. The RANDA network element is configured to perform big data analysis of the radio access network and big data application of the radio access network. A function of the RANDA network element may be disposed in at least one of an access network device in the radio access network and an operation support system (operation support subsystem, OSS) in the radio access network, and/or separately disposed in a network element entity other than the access network device and the OSS. It should be noted that, when the RANDA network element is disposed in the OSS, the RANDA network element is equivalent to OSSDA.

For example, the access network device includes an RNC or a NodeB in a UMTS, an eNodeB in LTE, or a gNB in a 5G network. In addition, optionally, a conventional BBU in the 5G network is reconstructed into a central unit (centralized unit, CU) and a distributed unit (distributed unit, DU). The gNB in the 5G network refers to an architecture in which the CU and the DU are co-located. When the RANDA network element is in the radio access network, there is an extended communications interface between RANDA network elements, and the extended communications interface may be used for message transfer between the RANDA network elements. The RANDA network element includes an analysis and modeling function (analysis and modeling function, AMF), a model execution function (model execution function, MEF), a data service function (data service function, DSF), and an adaptive policy function (adaptive policy function, APF). The functions are described in detail in the following embodiments of the present invention.

It should be noted that a conventional BBU function is reconstructed into a CU and a DU in 5G. A CU device includes a non-real-time wireless higher layer protocol stack function, and further supports some core network functions in being deployed to the edge and deployment of an edge application service. A DU device includes a layer 2 function for processing a physical layer function and a real-time requirement. It should be further noted that, from a perspective of an architecture, the CU and the DU may be implemented by independent hardware.

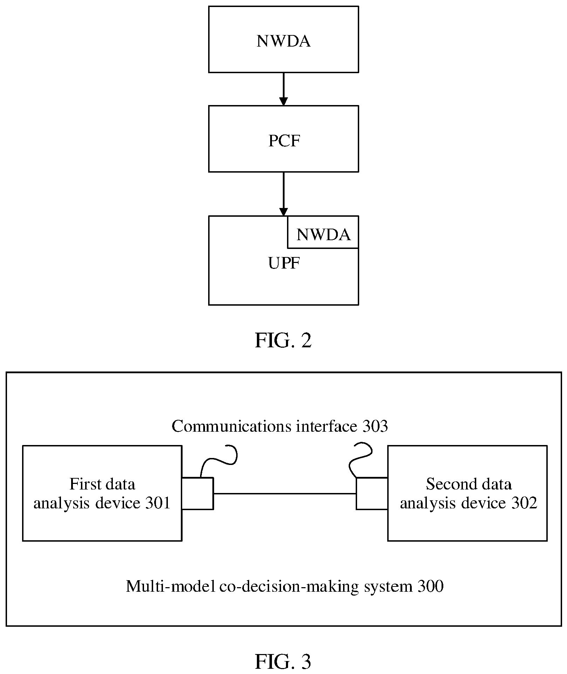

FIG. 2 is a schematic structural diagram of a core network according to an embodiment of this application.

The core network includes a network data analysis (network data analysis, NWDA) network element. The NWDA also has a network data analysis function, and is configured to optimize control parameters such as user network experience based on network big data analysis. The NWDA may be separately disposed at a centralized location, or may be disposed on a gateway forwarding plane (user plane function, UPF). It should be noted that there is also an extended communications interface between the NWDA network element disposed at the centralized location and the NWDA network element disposed on the UPF, used for message transfer between the NWDA network elements. A policy control function (policy control function, PCF) is further shown in FIG. 2.

Machine learning means that a rule is obtained by analyzing historical data, and then unknown data is predicted by using the rule. The machine learning usually includes four steps: data collection, data preprocessing and feature engineering, training, and a prediction. In a training process, a machine learning model is generated after training of a single training algorithm is completed. When a manner of the machine learning is applied to a wireless network, the machine learning is combined with deep learning. A specific application process is as follows:

Data collection: Various types of raw data are obtained from objects that generate data sources and are stored in a database or a memory of a network device for use during subsequent training or predictions. FIG. 1 is used as an example, and a CU, a DU, and a gNB are objects that generate data sources. FIG. 2 is used as an example, and a UPF is an object that generates a data source.

Data preprocessing and feature engineering: Preprocessing including data operations such as structuring, cleaning, deduplication, denoising, and feature engineering is performed on raw data. A process of performing the feature engineering may also be considered as further data processing, including operations such as training data feature extraction and correlation analysis. Data prepared for subsequent training is obtained through the foregoing preprocessing.

Training: The prepared data is trained based on a training algorithm, to obtain a training model. Different algorithms are selected during training, and a computer executes a training algorithm. After training of a single training algorithm is completed, a learning model of machine learning or deep learning is generated. Optional algorithms include regression, a decision tree, an SVM, a neural network, a Bayes classifier, and the like. Each type of algorithm includes a plurality of derived algorithm types, which are not listed in the embodiments of this application.

Prediction: New sample data is predicted based on the learning model, to obtain a prediction result corresponding to the learning model. In a case in which different learning models are generated based on different algorithms, when the new sample data is predicted, the obtained prediction result corresponding to the learning model may be a specific real number, or may be a classification result.

A machine learning algorithm of combinatorial learning is used in the embodiments of this application. The machine learning algorithm of the combinatorial learning refers to combination of the foregoing algorithms such as the regression, the decision tree, the SVM, the neural network, and the Bayes classifier. The combinatorial learning refers to random extraction (extract) of N data subsets from training data sets obtained after the foregoing data preprocessing, where N is a positive integer greater than 1. An extraction process of the N data subsets is as follows: In a phase of randomly selecting a sample, data is obtained in a manner of randomly obtaining data, and is stored according to two dimensions of the N data subsets. The two dimensions include a data type and a sample. A two-dimensional table for storing data is used as an example to describe the dimensions. A row in the two-dimensional table may represent one dimension, for example, the sample. A column in the two-dimensional table may represent the other dimension, for example, the data type. Therefore, the data obtained in the manner of randomly obtaining the data may constitute the two-dimensional table for storing data.

In the extraction process, extraction with replacement is used, and there may be duplicate data between the finally obtained N data subsets. The extraction with replacement means that some samples are randomly extracted from a raw training data set to form a data subset, and the extracted samples are still stored in the raw training data set. In next random extraction, a sample may also be extracted from the extracted samples. Therefore, there may be the duplicate data between the finally obtained N data subsets.

In a training process, data in the N data subsets is respectively used as training input data of N determined algorithms, and the N algorithms include any combination of algorithms such as the regression, the decision tree, the SVM, the neural network, and the Bayes classifier. For example, if it is determined that two data subsets are extracted, it is determined that two algorithms are used. The two algorithms may include two regression algorithms, or may include one regression algorithm and one decision tree algorithm. After training is completed, for each algorithm, a learning model corresponding to the algorithm is generated, prediction accuracy of each learning model is evaluated, and then a determined weight is allocated to each corresponding algorithm based on the prediction accuracy of the learning model. A weight corresponding to the algorithm may alternatively be manually set.

Same content is predicted by using the N obtained learning models corresponding to the N algorithms. In specific implementation, the learning model used for decision-making is set by technical personnel. For example, three learning models are used to predict a transmit power value of a base station. A same feature vector is input in a process of performing predictions by using the three learning models. After the three learning models obtain one prediction result through a prediction each, a final prediction result is determined from the three prediction results through voting.

A voting manner varies with a type of a prediction result.

If a prediction result is output as a numeric value, a used combination policy is an averaging method. There are two averaging methods. One is a simple averaging method shown in a formula (1), and the other is a weighted averaging method shown in a formula (2).

$$R(x) = \frac{1}{N} \sum_{i=1}^{N} r_i(x) \quad (1),$$

where

x indicates a feature vector of a current prediction, N is a quantity of learning models, and $r_i(x)$ indicates a prediction result of an $i^{th}$ learning model in the N learning models for the feature vector x.

$$R(x) = \sum_{i=1}^{N} w_i r_i(x) \quad (2),$$

where

x indicates a feature vector of a current prediction, N is a quantity of learning models, $r_i(x)$ indicates a prediction result of an $i^{th}$ learning model in the N learning models for the feature vector x, and $w_i$ is a weighting coefficient corresponding to the prediction result of the $i^{th}$ learning model in the N learning models.

For a classification service, if a prediction result of a model is output as a type, a decision is made through voting. There are three voting methods. A first method is a majority voting method shown in a formula (3). A second method is a plurality voting method shown in a formula (4). A third method is a weighted voting method shown in a formula (5). In the embodiments of this application, a method for making a decision through voting is not limited to the foregoing several methods.

$$R(x) = \begin{cases} c_j, if \sum_{i=1}^{N} r_i^{j}(x) > 0.5 \sum_{k=1}^{N} \sum_{i=1}^{N} r_i^{k}(x); \\ reject, otherwise \end{cases} \quad (3),$$

where

x indicates a feature vector of a current prediction, N is a quantity of learning models, i is a coefficient indication of a learning model, r indicates a prediction result of a learning model, $r_i(x)$ indicates a prediction result of an $i^{th}$ learning model in the N learning models for the feature vector x, and 0.5 means that a quantity of learning models that predict a prediction result needs to be greater than a half of a total quantity of learning models. N is a total quantity of classifiers, namely, the total quantity of learning models. c indicates a classification space set. j is a prediction type indication of a majority. T is a different classification value, for example, male or female above. K is a coefficient indication of different classifications, for example, there are two classifications in total. Reject indicates that a prediction fails because a result of being greater than a half is not met.

$$R(x) = c_{\arg j \max \sum_{i=1}^{N} r_i^{j}(x)} \quad (4),$$

where

x indicates a feature vector of a current prediction, N is a quantity of learning models, i is a coefficient indication of a learning model, r indicates a prediction result of a learning model, and $r_i(x)$ indicates a prediction result of an $i^{th}$ learning model in the N learning models for the feature vector x. N is a total quantity of learning models. c indicates a classification space set, and is short for a class. For example, if the classification is a gender prediction, c1 may be used to indicate a male and c2 may be used to indicate a female. j is a type indication of a maximum quantity of classifiers that predict a classification result. Arg indicates a variable value when an objective function takes a maximum or minimum value. For example, argmaxf(x) indicates a value of x when f(x) takes a maximum value, and argminf(x) indicates a value of x when f(x) takes a minimum value.

$$R(x) = c_{\arg j \max \sum_{i=1}^{N} w_i r_i^j(x)} \quad (5),$$

where

x indicates a feature vector of a current prediction, N is a quantity of learning models, i is a coefficient indication of a learning model, r indicates a prediction result of a learning model, and $r_i(x)$ indicates a prediction result of an $i^{th}$ learning model in the N learning models for the feature vector x. N is a total quantity of learning models. c indicates a classification space set, and is short for a class. For example, if this classification is a gender prediction, c1 may be used to indicate a male and c2 may be used to indicate a female. j is a type indication of a maximum weighted quantity of classifiers that predict a classification result. $w_i$ is a weighting coefficient corresponding to the prediction result of the $i^{th}$ learning model in the N learning models.

In the multi-model co-decision-making solution disclosed in the embodiments of this application, a data analysis device trains a target service based on a combinatorial learning algorithm, to obtain a plurality of learning models, sends the plurality of learning models to another data analysis device through an extended communications interface, and performs a model prediction. Transmission of the plurality of learning models for one target service between data analysis devices is implemented, and an execution policy of the target service is finally determined based on prediction results of predictions that are based on the plurality of learning models. Therefore, the execution policy of the target service is determined based on the prediction results obtained through the predictions of the plurality of models, thereby improving prediction accuracy.

A multi-model co-decision-making system shown in FIG. 3 is used as an example to describe in detail a multi-model co-decision-making solution disclosed in an embodiment of this application.

The multi-model co-decision-making system 300 includes a first data analysis device 301, a second data analysis device 302, and a communications interface 303 disposed between the first data analysis device 301 and the second data analysis device 302.

The communications interface 303 is configured to establish a communication connection between the first data analysis device 301 and the second data analysis device 302.

The first data analysis device 301 is configured to: train a target service based on a combinatorial learning algorithm, to obtain a plurality of learning models, generate an installation message used to indicate to install the plurality of learning models, and send the installation message to the second data analysis device 302 through the communications interface 303.

The plurality of learning models include a primary model and a secondary model. There is one primary model, and the remaining models are secondary models. The primary model and the secondary model may be manually set. A learning model with a maximum weight coefficient is usually set as the primary model. The primary model has a globally unique primary model identifier ID, used to indicate a current learning model combination. The secondary models have respective secondary model identifiers IDs, for example, a secondary model 1 and a secondary model 2.

The installation message includes description information of the primary model, description information of the secondary model, and voting decision-making information of voting on prediction results of the plurality of learning models.

The description information of the primary model includes an identifier ID of the primary model, an algorithm type indication of the primary model, an algorithm model structure parameter of the primary model, an installation indication, and a weight coefficient of the primary model.

The description information of the secondary model includes an identifier ID of each secondary model, an algorithm type indication of each secondary model, an algorithm model structure parameter of each secondary model, and a weight of each secondary model.

Optionally, each of the algorithm type indication of the primary model and the algorithm type indication of each secondary model may be regression, a decision tree, an SVM, a neural network, a Bayes classifier, or the like. Different algorithms correspond to different algorithm model structure parameters. For example, a result parameter includes a regression coefficient, a Lagrange coefficient, or the like. Operation methods of the model include operation methods such as model installation and model update.

Optionally, the voting decision-making information includes averaging method voting decision-making information. The averaging method voting decision-making information includes simple averaging voting decision-making information or weighted averaging decision-making information. For a specific application manner, refer to the corresponding voting manner disclosed in the foregoing embodiment of this application.

Optionally, the voting decision-making information includes vote quantity-based decision-making information.

The vote quantity-based decision-making information includes majority voting decision-making information, plurality voting decision-making information, or weighted voting decision-making information. For a specific application manner, refer to the corresponding voting manner disclosed in the foregoing embodiment of this application.

In a specific process of matching a policy with the target service, any voting manner disclosed in the foregoing embodiment of this application may be used based on a specific case.

The second data analysis device 302 is configured to: receive the installation message, install the plurality of learning models based on the installation message, perform predictions based on the plurality of learning models, and match the policy with the target service based on a prediction result of each of the plurality of learning models and the voting decision-making information.

The second data analysis device 302 is further configured to receive a request message sent by the first data analysis device 301, where the request message is used to request a feature vector, and the request message includes identification information of the primary model and identification information of the feature vector.

Optionally, the second data analysis device 302 is further configured to feed back, to the first data analysis device 301, statistical information obtained in a process of performing the model prediction based on the plurality of learning models. The statistical information includes an identifier of the primary model, a total quantity of prediction times of model predictions performed by each learning model within a preset time interval, a prediction result of each prediction performed by each learning model, and a final prediction result of each prediction.

Optionally, the first data analysis device 301 is further configured to: obtain, through the communications interface 303, the statistical information fed back by the second data analysis device 302, and optimize a model of the target service based on the statistical information.

Further optionally, the installation message sent by the first data analysis device 301 further includes first periodicity information. The first periodicity information is used to indicate a feedback periodicity for another data analysis device to feed back the statistical information. The second data analysis device 302 is further configured to feed back, to the first data analysis device 301 based on the feedback periodicity, the statistical information in the process of performing the model prediction based on the plurality of learning models.

The preset time interval is the same as the feedback periodicity.

Optionally, the statistical information may further include a total quantity of obtained prediction results of each type. In this way, a voting result is more accurate when a voting manner related to a classification service is used subsequently.

For example, the feedback periodicity of the model prediction is used to indicate the second data analysis device 302 to feed back the statistical information to the first data analysis device 301 once every 100 predictions, or feed back the statistical information to the first data analysis device 301 once every hour.

It should be noted that the first data analysis device 301 has an analysis and modeling function (analysis and modeling function, AMF). The second data analysis device 302 has a model execution function (model execution function, MEF), a data service function (data service function, DSF), and an adaptive policy function (adaptive policy function, APF).

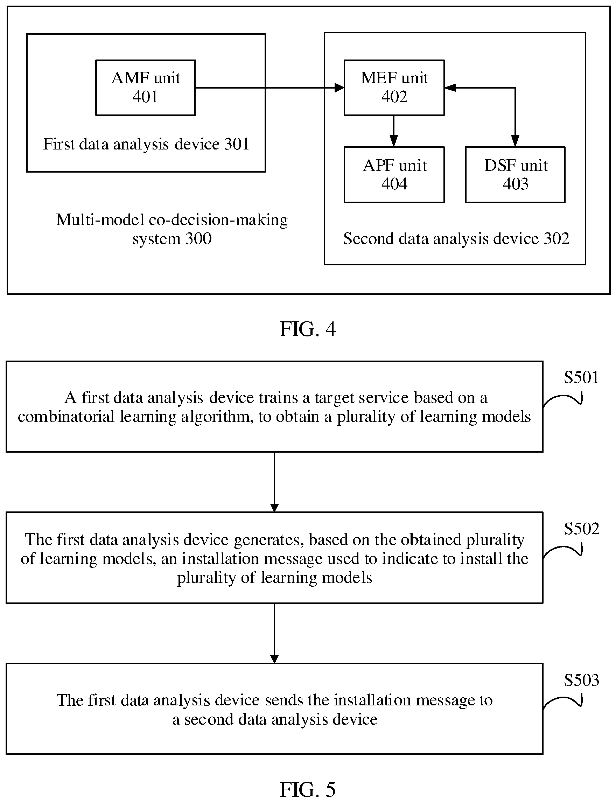

Corresponding to the foregoing four types of logical functions obtained through division, as shown in FIG. 4, the first data analysis device 301 includes an AMF unit 401. The second data analysis device 302 includes an MEF unit 402, a DSF unit 403, and an APF unit 404. A communications interface used for message transfer is established between the units.

The AMF unit 401 in the first data analysis device 301 is configured to: train a target service based on a combinatorial learning algorithm, to obtain a plurality of learning models, generate an installation message used to indicate to install the plurality of learning models, and send the installation message to the second data analysis device 302 through the communications interface.

The MEF unit 402 in the second data analysis device 302 is configured to: receive the installation message and a request message that are sent by the AMF unit 401, parse the installation message, install the plurality of learning models based on the parsed installation message, and send the request message to the DSF unit 403. The request message is used to request a feature vector, and the request message includes identification information of a primary model and identification information of the feature vector.

Optionally, the MEF unit 402 locally installs the plurality of learning models by parsing the installation message sent by the AMF unit 401, and feeds back a model installation response message to the AMF unit 401 after the installation is completed, where the model installation response message carries an indication message indicating whether the installation succeeds. If the installation succeeds, the MEF unit 402 sends the request message to the DSF unit 403 after receiving a feedback message sent by the DSF unit 403.

Optionally, the MEF unit 402 is further configured to feed back statistical information to the first data analysis device, where the statistical information includes an identifier of the primary model, a total quantity of prediction times of model predictions performed by each learning model within a preset time interval, a prediction result of each prediction performed by each learning model, and a final prediction result of each prediction.

Optionally, the AMF unit 401 in the first data analysis device is further configured to optimize a model of the target service based on the statistical information sent by the MEF unit 402. A specific optimization process is as follows: The AMF unit optimizes, based on a prediction hit ratio of each model, an algorithm corresponding to a model with a relatively low prediction rate. An optimization manner includes sampling data retraining, weight adjustment, algorithm replacement, and the like.

Optionally, if the installation message sent by the AMF unit 401 includes first periodicity information, and the first periodicity information is used to feed back a feedback periodicity of the statistical information, the MEF unit 402 is further configured to periodically feed back the statistical information to the AMF unit 401 based on the feedback periodicity.

The preset time interval is the same as the feedback periodicity.

The DSF unit 403 is configured to: collect, based on the request message sent by the MEF unit 402, data from a network device or a network function in which the second data analysis device is located, and send the feedback message to the MEF unit 402. The feedback message includes the identification information that is of the primary model and the feature vector. For example, the network device or the network function refers to a CU, a DU, or a gNB in FIG. 1 or refers to a UPF in FIG. 2.

In specific implementation, the feedback message further carries a feature parameter type index identifier ID, the feature vector is a feature vector corresponding to the feature parameter type index identifier ID, and the identification information of the primary model is identification information that is of a primary model in the request message and that corresponds to the feature vector.

In specific implementation, the feature vector may be a specific feature value obtained from the network device or the network function module in which the second data analysis device is located, and the feature value is used as an input parameter during the model prediction.

The MEF unit 402 is configured to: receive the feedback message, determine the plurality of learning models based on the identification information of the primary model in the feedback message, use the feature vector as an input parameter of the plurality of learning models, obtain a prediction result after a model prediction is performed by each of the plurality of learning models, determine a final prediction result based on the prediction result of each learning model and voting decision-making information, and send the final prediction result and the identification information of the primary model to the APF unit 404.

Herein, selection of a MIMO RI is used as an example to describe the foregoing process of determining the final prediction result based on the prediction result of each learning model and the voting decision-making information. It is assumed that three algorithms: an SVM, logistic regression, and a neural network are used for combinatorial learning. A weight of an SVM model is 0.3, a weight of a logistic regression model is 0.3, and a weight of a neural network model is 0.4. A voting algorithm shown in a formula (2) is used. Results obtained by performing predictions by using the SVM, the logistic regression, and the neural network are respectively 1, 1, and 2. After weighting is performed, a weight of a voting result of 1 is 0.6, and a weight of a voting result of 2 is 0.4. If a maximum prediction value is used for the final prediction result, an RI is set to 1.

The APF unit 404 is configured to match, based on the final prediction result, a policy with the target service corresponding to the identification information of the primary model.

Optionally, if the request message received by the MEF unit 402 includes second periodicity information, and the second periodicity information is used to indicate a collection periodicity for collecting data related to the feature vector, the DSF unit 403 is further configured to: collect, based on the collection periodicity, the data from the network device or the network function in which the second data analysis device is located, and send the feedback message to the MEF unit 402. Each set of data collected from the network device or the network function is a group of feature vectors, and is used as an input parameter of the plurality of learning models.

For example, if a subscription periodicity that is of the feature vector and that is included in the request message is 3 minutes, the DSF unit 403 collects data every 3 minutes, and sends a feedback message to the MEF unit 403. The subscription periodicity is not specifically limited in this embodiment of this application.

Optionally, the feedback message sent by the DSF unit 403 to the MEF unit 402 may also carry an identifier indicating whether the feature vector is successfully subscribed to. An identifier indicating a subscription success is used to indicate the DSF unit 403 to send the feedback message to the MEF unit 402 after the DSF unit 403 receives the request message sent by the MEF unit 402 and then checks that each feature value indicated in the request message can be provided.

It should be noted that in addition to an AMF, the first data analysis device 301 may further include an MEF, a DSF, and an APF. The first data analysis device 301 can also receive an installation message sent by another data analysis device, and perform a function that is the same as that of the second data analysis device 302.

Similarly, the second data analysis device 302 may also have an AMF unit, and can send an installation message to another data analysis device.

According to the multi-model co-decision-making system and method disclosed in the embodiments of this application, the data analysis device trains the target service based on the combinatorial learning algorithm, to obtain the plurality of learning models, generates the installation message used to indicate to install the plurality of learning models, and sends the installation message to the another data analysis device, so that the installation message is used to trigger installation of the plurality of learning models and predictions and policy matching that are based on the plurality of learning models. Transmission of the plurality of learning models for one target service between data analysis devices is implemented, and an execution policy of the target service is finally determined based on prediction results of the predictions that are based on the plurality of learning models. The execution policy of the target service can be determined based on the prediction results obtained through the predictions of the plurality of models, thereby improving prediction accuracy.

If the multi-model co-decision-making system 300 is applied to the radio access network shown in FIG. 1, the first data analysis device 301 and the second data analysis device 302 each may be any RANDA shown in FIG. 1.

For example, the first data analysis device 301 is RANDA (which is actually OSSDA) disposed in a RAN OSS, and the second data analysis device 302 is RANDA disposed on a CU, a DU, or a gNB. The RANDA disposed in the RAN OSS trains one target service based on a combinatorial learning algorithm, to obtain a plurality of learning models, and sends, through an extended communications interface, an installation message for the plurality of learning models to the RANDA disposed on the CU, the DU, or the gNB, or sends, through an extended communications interface, the installation message to an instance that is of the RANDA and that is disposed on the CU, the DU, or the gNB, or sends the installation message to the CU, the DU, or the gNB.

Further, the first data analysis device 301 is also applicable to separately deployed RANDA. The separately deployed RANDA sends an installation message and the like to the CU, the DU, and a NodeB through an extended communications interface. The first data analysis device 301 is also applicable to RANDA deployed on the CU. The RANDA deployed on the CU sends an installation message and the like to the DU or the NodeB through an extended communications interface.

If the multi-model co-decision-making system 300 is applied to the core network shown in FIG. 2, the first data analysis device 301 and the second data analysis device 302 each are equivalent to the NWDA shown in FIG. 2.

For example, the first data analysis device 301 is NWDA independently disposed at a centralized location, and the second data analysis device 302 is NWDA disposed on a UPF. The NWDA disposed at the centralized location trains one target service based on a combinatorial learning algorithm, to obtain a plurality of learning models, and sends, through an extended communications interface, an installation message for the plurality of learning models to the NWDA disposed on the UPF.

It should be noted that, because a computing capability of a network element is limited, it is not suitable for a big data training task with extremely high computing complexity, for example, a base station and a UPF. In addition, a communication type service run on the network element has a high requirement for real-time performance. Based on some features that a prediction is performed by using an artificial intelligence (artificial intelligence, AI) algorithm model, the AI algorithm model is deployed on the network element to meet a latency requirement, so that a prediction time can be reduced. Therefore, in this embodiment of this application, in consideration of the computing capability of the network element and the requirement of the service for real-time performance, the first data analysis device and the second data analysis device are respectively disposed on two apparatuses, to respectively complete training and a prediction.

According to the multi-model co-decision-making system disclosed in the foregoing embodiment of this application, the installation message carrying the plurality of learning models is transferred between data analysis devices, RANDA, NWDA, or network elements by extending an installation interface of an original learning model, so that when there is a relatively small amount of training data, a plurality of models are trained by using a combinatorial learning method, and an execution policy of the target service is finally determined based on prediction results of predictions that are based on the plurality of learning models. Therefore, the execution policy of the target service is determined based on the prediction results obtained through the predictions of the plurality of models, thereby improving prediction accuracy.

Based on the multi-model co-decision-making system disclosed in the foregoing embodiment of this application, an embodiment of this application further discloses a multi-model co-decision-making method corresponding to the multi-model co-decision-making method. As shown in FIG. 5, the method mainly includes the following steps:

S501: A first data analysis device trains a target service based on a combinatorial learning algorithm, to obtain a plurality of learning models.

S502: The first data analysis device generates, based on the obtained plurality of learning models, an installation message used to indicate to install the plurality of learning models.

S503: The first data analysis device sends the installation message to a second data analysis device.

The installation message is used to indicate to install the plurality of learning models. The plurality of learning models include a primary model and a secondary model. The installation message includes description information of the primary model, description information of the secondary model, and voting decision-making information of voting on prediction results of the plurality of learning models.

It should be noted that, for the description information of the primary model and the description information of the secondary model, refer to corresponding descriptions in the first data analysis device disclosed in the foregoing embodiment of this application. Details are not described herein again.

For details of the voting decision-making information, refer to the voting method part disclosed in the foregoing embodiment of this application.

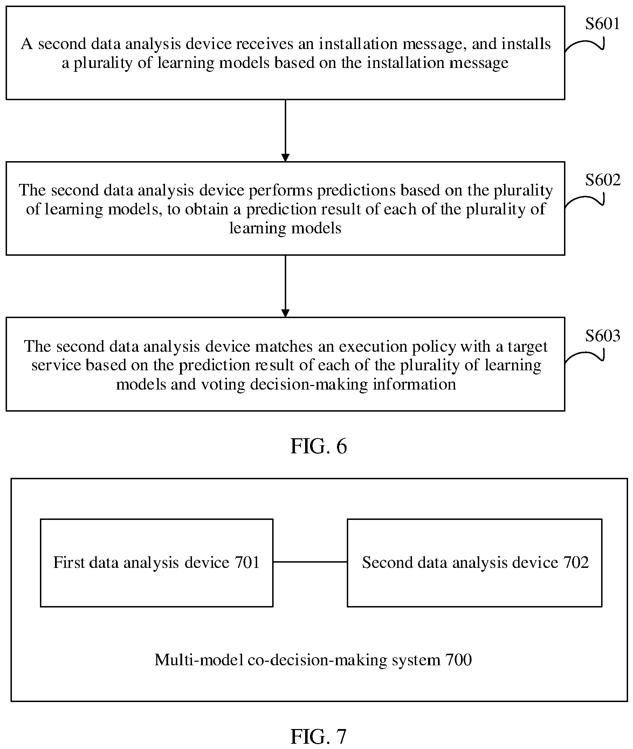

Based on the multi-model co-decision-making system disclosed in the foregoing embodiment of this application, an embodiment of this application further discloses another multi-model co-decision-making method corresponding to the multi-model co-decision-making system, and the method is shown in FIG. 6.

S601: A second data analysis device receives an installation message, and installs a plurality of learning models based on the installation message.

In specific implementation, first, the second data analysis device receives the installation message and a request message, parses the installation message, and installs the plurality of learning models based on the parsed installation message. The request message is used to request to subscribe to a feature vector. The request message includes identification information of a primary model and identification information of the feature vector. Then, the second data analysis device collects data from a network device based on the request message, and generates a feedback message, and the feedback message includes the identification information that is of the primary model and the feature vector.

Optionally, if the request message includes second periodicity information, and the second periodicity information is used to indicate a collection periodicity for collecting data related to the feature vector, the second data analysis device collects the data from the network device based on the collection periodicity.

Optionally, the second data analysis device may further feed back a model installation response message to a first data analysis device. The model installation response message carries an indication message indicating whether installation succeeds.

S602: The second data analysis device performs predictions based on the plurality of learning models, to obtain a prediction result of each of the plurality of learning models.

In specific implementation, the second data analysis device determines the plurality of learning models for predictions based on the identification information of the primary model, uses the feature vector as an input parameter of the plurality of learning models, obtains the prediction result after a model prediction is performed by each of the plurality of learning models, and determines a final prediction result based on the prediction result of each learning model and voting decision-making information.

Optionally, the second data analysis device may further feed back, to the first data analysis device, statistical information in a process of performing the model prediction based on the plurality of learning models. The statistical information includes an identifier of the primary model, a total quantity of prediction times of model predictions performed by each learning model within a preset time interval, a prediction result of each prediction performed by each learning model, and a final prediction result of each prediction.

The first data analysis device optimizes a model of a target service based on the statistical information.

If the installation message includes first periodicity information, and the first periodicity information is used to indicate a feedback periodicity for another data analysis device to feed back the statistical information, the second data analysis device feeds back, to the first data analysis device based on the feedback periodicity, the statistical information in the process of performing the model prediction based on the plurality of learning models. The prediction time interval is the same as the feedback periodicity.

S603: The second data analysis device matches a policy with the target service based on the prediction result of each of the plurality of learning models and the voting decision-making information.

For specific principles and functions of the first data analysis device and the second data analysis device in the multi-model co-decision-making method disclosed in this embodiment of this application in a specific execution process, refer to corresponding parts in the multi-model co-decision-making system disclosed in the foregoing embodiment of this application. Details are not described herein again.

According to the multi-model co-decision-making method disclosed in this embodiment of this application, The data analysis device trains the target service based on a combinatorial learning algorithm, to obtain the plurality of learning models, generates the installation message used to indicate to install the plurality of learning models, and sends the installation message to the another data analysis device, so that the installation message is used to trigger installation of the plurality of learning models and predictions and policy matching that are based on the plurality of learning models. Transmission of the plurality of learning models for one target service between data analysis devices is implemented, and an execution policy of the target service is finally determined based on prediction results of the predictions that are based on the plurality of learning models. The execution policy of the target service can be determined based on the prediction results obtained through the predictions of the plurality of models, thereby improving prediction accuracy.

With reference to the multi-model co-decision-making system and method disclosed in the foregoing embodiments of this application, the first data analysis device and the second data analysis device may alternatively be directly implemented by using hardware, a memory executed by a processor, or a combination thereof.

As shown in FIG. 7, the multi-model co-decision-making system 700 includes a first data analysis device 701 and a second data analysis device 702.

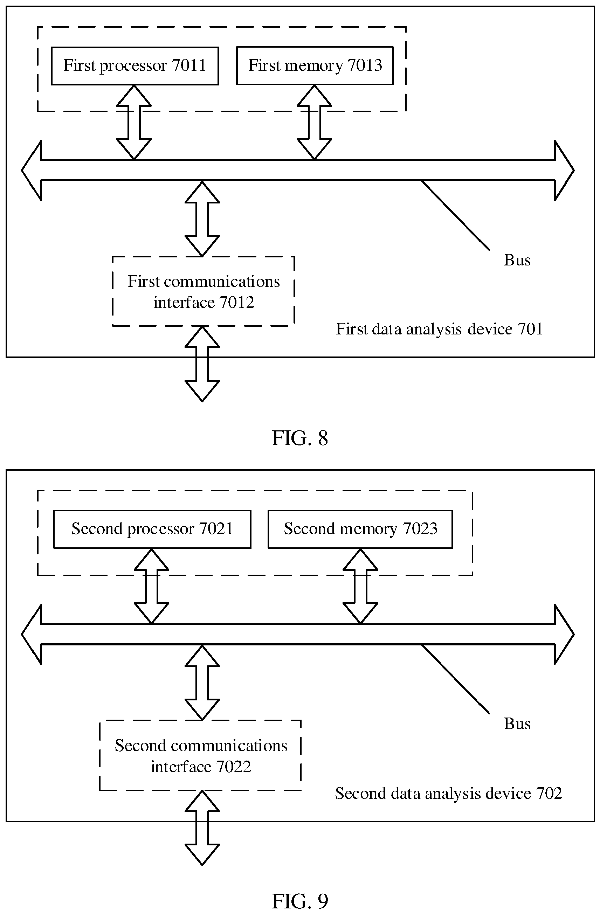

As shown in FIG. 8, the first data analysis device 701 includes a first processor 7011 and a first communications interface 7012. Optionally, the first data analysis device further includes a first memory 7013.

The first processor 7011 is coupled to the first memory 7012 by using a bus. The first processor 7011 is coupled to the communications interface 7012 by using the bus.

As shown in FIG. 8, the second data analysis device 702 includes a second processor 7021 and a second communications interface 7022. Optionally, the second data analysis device further includes a second memory 7023.

The second processor 7021 is coupled to the second memory 7023 by using a bus. The second processor 7021 is coupled to the communications interface 7022 by using the bus.

The first processor 7011 and the second processor 7021 may be specifically a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), or a generic array logic (generic array logic, GAL).

The first memory 7013 and the second memory 7023 may be specifically a content-addressable memory (content-addressable memory, CAM) or a random-access memory (random-access memory, RAM). The CAM may be a ternary content-addressable memory (ternary CAM, TCAM).

The first communications interface 7012 and the second communications interface 7022 may be wired interfaces, for example, a fiber distributed data interface (fiber distributed data interface, FDDI) or an ethernet (ethernet) interface.

The first memory 7013 may also be integrated into the first processor 7011. If the first memory 7013 and the first processor 7011 are components independent of each other, the first memory 7013 is connected to the first processor 7011. For example, the first memory 7013 may communicate with the first processor 7011 by using a bus. The first communications interface 7012 may communicate with the first processor 7011 by using the bus, or the first communications interface 7012 may be directly connected to the first processor 7011.

The first memory 7013 is configured to store an operation program, code, or an instruction related to the first data analysis device in the multi-model co-decision-making method disclosed in the foregoing embodiments of this application. Optionally, the first memory 7013 includes an operating system and an application, which are used for the operation program, the code, or the instruction related to the first data analysis device in the multi-model co-decision-making method disclosed in the foregoing embodiments of this application.

When the first processor 7011 or a hardware device needs to perform a related operation of the first data analysis device in the multi-model co-decision-making method disclosed in the foregoing embodiments of this application, the operation program, the code, or the instruction stored in the first memory 7013 may be invoked and executed to complete a process in which the first data analysis device in the foregoing embodiments of this application performs a corresponding multi-model co-decision-making method. For a specific process, refer to the foregoing corresponding part of the foregoing embodiments of this application. Details are not described herein again.

The second memory 7021 may also be integrated into the second processor 7023. If the second memory 7023 and the second processor 7021 are components independent of each other, the second memory 7023 is connected to the second processor 7021. For example, the second memory 7023 may communicate with the second processor 7021 by using a bus. The second communications interface 7022 may communicate with the second processor 7021 by using the bus, or the second communications interface 7022 may be directly connected to the second processor 7021.

The second memory 7023 is configured to store an operation program, code, or an instruction related to the second data analysis device disclosed in the foregoing embodiments of this application. Optionally, the second memory 7023 includes an operating system and an application, which are used for the operation program, the code, or the instruction related to the second data analysis device disclosed in the foregoing embodiments of this application.

When the second processor 7021 or a hardware device needs to perform a related operation of the second data analysis device disclosed in the foregoing embodiments of this application, the operation program, the code, or the instruction stored in the second memory 7023 may be invoked and executed to complete a process in which the second data analysis device in the foregoing embodiments of this application performs a corresponding multi-model co-decision-making method. For a specific process, refer to the foregoing corresponding part of the foregoing embodiments of this application. Details are not described herein again.

It may be understood that a receiving/sending operation and the like in the foregoing embodiments may be receiving/sending processing implemented by a processor, or may be a sending/receiving process completed by a receiver and a transmitter. The receiver and the transmitter may exist independently.

It may be understood that FIG. 7 shows only a simplified device of the first data analysis device, and FIG. 8 shows only a simplified design of the second data analysis device. In actual application, the first data analysis device and the second data analysis device may include any quantity of interfaces, processors, memories, and the like, and all first data analysis devices, second data analysis devices, and multi-model co-decision-making systems that can implement the embodiments of this application fall within the protection scope of the embodiments of this application.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

**Claims**

1. A data analysis device (301), wherein the data analysis device comprises:

   a communications interface (303), configured to establish a communication connection to another data analysis device (302); and
   a processor, configured to: train (S501) a plurality of learning models based on a plurality of combinatorial learning algorithms, generate (S502) an installation message used to indicate to install the plurality of learning models, and send (S503) the installation message to the another data analysis device (302) through the communications interface, wherein the plurality of learning models comprise a primary model and a secondary model, and the installation message comprises description information of the primary model, description information of the secondary model, and voting decision-making information of voting on prediction results of the plurality of learning models;
   wherein the voting decision-making information comprises averaging method voting decision-making information, and the averaging method voting decision-making information comprises simple averaging voting decision-making information or weighted averaging decision-making information; or
   the voting decision-making information comprises vote quantity-based decision-making information, and the vote quantity-based decision-making information comprises majority voting decision-making information, plurality voting decision-making information, or weighted voting decision-making information.

2. The data analysis device (301) according to claim 1, wherein the processor is further configured to: obtain statistical information through the communications interface, wherein the statistical information comprises an identifier of the primary model, a total quantity of prediction times of model predictions performed by each learning model within a preset time interval, a prediction result of each prediction performed by each learning model, and a final prediction result of each prediction.

3. The data analysis device (301) according to claim 2, wherein the installation message further comprises first periodicity information, the first periodicity information is used to indicate a feedback periodicity for the another data analysis device (302) to feed back the statistical information, and the preset time interval is the same as the feedback periodicity.

4. The data analysis device (301) according to any one of claims 1 to 3, wherein the processor is configured to send a request message to the another data analysis device (302) through the communications interface, wherein the request message is used to request to subscribe to a feature vector, the request message comprises second periodicity information, and the second periodicity information is used to indicate a collection periodicity for collecting data related to the feature vector.

5. The data analysis device (301) according to any one of claims 1 to 4, wherein the data analysis device (301) is a radio access network data analysis network element or a network data analysis network element.

6. A multi-model co-decision-making method, wherein the method comprises:

Training (S501), by a data analysis device (301), a plurality of learning models based on a plurality of combinatorial learning algorithms, generating (S502) an installation message used to indicate to install the plurality of learning models, and sending (S503) the installation message to another data analysis device (302), so that the installation message is used to trigger installation of the plurality of learning models, wherein the plurality of learning models comprise a primary model and a secondary model, the installation message comprises description information of the primary model, description information of the secondary model, and voting decision-making information of voting on prediction results of the plurality of learning models;

wherein the voting decision-making information comprises averaging method voting decision-making information or vote quantity-based decision-making information;

the averaging method voting decision-making information comprises simple averaging voting decision-making information or weighted averaging decision-making information; and

the vote quantity-based decision-making information comprises majority voting decision-making information, plurality voting decision-making information, or weighted voting decision-making information.

7. A computer-readable storage medium, comprising an instruction, wherein when the instruction is run on a computer, the computer is enabled to perform the method according to claim 6.

**Patentansprüche**

1. Datenanalysevorrichtung (301), wobei die Datenanalysevorrichtung umfasst:

   eine Kommunikationsschnittstelle (303), die konfiguriert ist, um eine Kommunikationsverbindung zu einer anderen Datenanalysevorrichtung (302) herzustellen; und

   einen Prozessor, der konfiguriert ist zum: Trainieren (S501) einer Vielzahl von Lernmodellen basierend auf einer Vielzahl von kombinatorischen Lernalgorithmen, Erzeugen (S502) einer Installationsnachricht, die verwendet wird, um anzugeben, die Vielzahl von Lernmodellen zu installieren, und Senden (S503) der Installationsnachricht an die andere Datenanalysevorrichtung (302) über die Kommunikationsschnittstelle, wobei die Vielzahl von Lernmodellen ein Primärmodell und ein Sekundärmodell umfasst, und die Installationsnachricht Beschreibungsinformationen des Primärmodells, Beschreibungsinformationen des Sekundärmodells und Abstimmungsentscheidungsinformationen zum Abstimmen über Vorhersageergebnisse der Vielzahl von Lernmodellen umfasst;

   wobei die Abstimmungsentscheidungsinformationen Mittelungsmethode-Abstimmungsentscheidungsinformationen umfassen, und die Mittelungsmethode-Abstimmungsentscheidungsinformationen Einfache-Mittelung-Abstimmungsentscheidungsinformationen oder Gewichtete-Mittelung-Entscheidungsinformationen umfassen; oder

   die Abstimmungsentscheidungsinformationen abstimmungsmengenbasierte Entscheidungsinformationen umfassen, und die abstimmungsmengenbasierten Entscheidungsinformationen Mehrheits-Abstimmungsentscheidungsinformationen, Vielzahl-Abstimmungsentscheidungsinformationen oder gewichtete Abstimmungsentscheidungsinformationen umfassen.

2. Datenanalysevorrichtung (301) nach Anspruch 1, wobei der Prozessor ferner konfiguriert ist zum: Erhalten statistischer Informationen über die Kommunikationsschnittstelle, wobei die statistischen Informationen eine Kennung des Primärmodells, eine Gesamtmenge von Vorhersagezeiten von Modellvorhersagen, die durch jedes Lernmodell innerhalb eines voreingestellten Zeitintervalls durchgeführt werden, ein Vorhersageergebnis jeder Vorhersage, die durch jedes Lernmodell durchgeführt wird, und ein Endvorhersageergebnis jeder Vorhersage umfassen.

3. Datenanalysevorrichtung (301) nach Anspruch 2, wobei die Installationsnachricht ferner erste Periodizitätsinformationen umfasst, wobei die ersten Periodizitätsinformationen verwendet werden, um eine Rückmeldeperiodizität für die andere Datenanalysevorrichtung (302) anzugeben, um die statistischen Informationen rückzumelden, und das voreingestellte Zeitintervall der Rückmeldeperiodizität entspricht.

4. Datenanalysevorrichtung (301) nach einem der Ansprüche 1 bis 3, wobei der Prozessor konfiguriert ist, um eine Anforderungsnachricht an die andere Datenanalysevorrichtung (302) über die Kommunikationsschnittstelle zu senden, wobei die Anforderungsnachricht verwendet wird, um anzufordern, einen Merkmalsvektor zu subskribieren, die Anforderungsnachricht zweite Periodizitätsinformationen umfasst, und die zweiten Periodizitätsinformationen verwendet werden, um eine Sammelperiodizität zum Sammeln von Daten bezüglich des Merkmalsvektors anzugeben.

5. Datenanalysevorrichtung (301) nach einem der Ansprüche 1 bis 4, wobei die Datenanalysevorrichtung (301) ein Funkzugangsnetzwerkdatenanalyse-Netzwerkelement oder ein Netzwerkdatenanalyse-Netzwerkelement ist.

6. Mehrmodell-Co-Entscheidungsverfahren, wobei das Verfahren umfasst:

Trainieren (S501), durch eine Datenanalysevorrichtung (301), einer Vielzahl von Lernmodellen basierend auf einer Vielzahl von kombinatorischen Lernalgorithmen, Erzeugen (S502) einer Installationsnachricht, die verwendet wird, um anzugeben, die Vielzahl von Lernmodellen zu installieren, und Senden (S503) der Installationsnachricht an eine andere Datenanalysevorrichtung (302), sodass die Installationsnachricht verwendet wird, um die Installation der Vielzahl von Lernmodellen auszulösen, wobei die Vielzahl von Lernmodellen ein Primärmodell und ein Sekundärmodell umfasst, wobei die Installationsnachricht Beschreibungsinformationen des Primärmodells, Beschreibungsinformationen des Sekundärmodells und Abstimmungsentscheidungsinformationen zum Abstimmen über Vorhersageergebnisse der Vielzahl von Lernmodellen umfasst;
wobei die Abstimmungsentscheidungsinformationen Mittelungsmethode-Abstimmungsentscheidungsinformationen oder abstimmungsmengenbasierte Entscheidungsinformationen umfassen;
wobei die Mittelungsmethode-Abstimmungsentscheidungsinformationen Einfache-Mittelung-Abstimmungsentscheidungsinformationen oder Gewichtete-Mittelung-Entscheidungsinformationen umfassen; und
die abstimmungsmengenbasierten Entscheidungsinformationen Mehrheits-Abstimmungsentscheidungsinformationen, Vielzahl-Abstimmungsentscheidungsinformationen oder gewichtete Abstimmungsentscheidungsinformationen umfassen.

7. Computerlesbares Speichermedium, das eine Anweisung umfasst, wobei, wenn die Anweisung auf einem Computer ausgeführt wird, dem Computer ermöglicht wird, das Verfahren nach Anspruch 6 durchzuführen.

**Revendications**

1. Dispositif d'analyse de données (301), dans lequel le dispositif d'analyse de données comprend :

une interface de communication (303), configurée pour établir une connexion de communication à un autre dispositif d'analyse de données (302) ; et
un processeur, configuré pour : former (S501) une pluralité de modèles d'apprentissage sur la base d'une pluralité d'algorithmes d'apprentissage combinatoire, générer (S502) un message d'installation utilisé pour indiquer d'installer la pluralité de modèles d'apprentissage, et envoyer (S503) le message d'installation à l'autre dispositif d'analyse de données (302) par l'intermédiaire de l'interface de communication, dans lequel la pluralité de modèles d'apprentissage comprend un modèle primaire et un modèle secondaire, et le message d'installation comprend des informations de description du modèle primaire, des informations de description du modèle secondaire et des informations de prise de décision de vote du vote sur des résultats de prédiction de la pluralité de modèles d'apprentissage ;
dans lequel les informations de prise de décision de vote comprennent des informations de prise de décision de vote de procédé moyennes, et les informations de prise de décision de vote de procédé moyennes comprennent des informations de prise de décision de vote moyennes simples ou des informations de prise de décision moyennes pondérées ; ou
les informations de prise de décision de vote comprennent des informations de prise de décision sur la base d'une quantité de vote, et les informations de prise de décision sur la base d'une quantité de vote comprennent des informations de prise de décision de vote majoritaire, une pluralité d'informations de prise de décision de vote ou des informations de prise de décision de vote pondérées.

2. Dispositif d'analyse de données (301) selon la revendication 1, dans lequel le processeur est en outre configuré pour : obtenir des informations statistiques par l'intermédiaire de l'interface de communication, dans lequel les informations statistiques comprennent un identifiant du modèle primaire, une quantité totale de temps de prédiction de prédictions de modèle effectuées par chaque modèle d'apprentissage dans un intervalle de temps prédéfini, un résultat de prédiction de chaque prédiction effectuée par chaque modèle d'apprentissage et un résultat de prédiction final de chaque prédiction.

3. Dispositif d'analyse de données (301) selon la revendication 2, dans lequel le message d'installation comprend en outre des premières informations de périodicité, les premières informations de périodicité sont utilisées pour indiquer une périodicité de rétroaction pour l'autre dispositif d'analyse de données (302) afin de renvoyer les informations statistiques, et l'intervalle de temps prédéfini est identique à la périodicité de rétroaction.

4. Dispositif d'analyse de données (301) selon l'une quelconque des revendications 1 à 3, dans lequel le processeur est configuré pour envoyer un message de demande à l'autre dispositif d'analyse de données (302) par l'intermédiaire de l'interface de communication, dans lequel le message de demande est utilisé pour demander à s'abonner à un vecteur de caractéristiques, le message de demande comprend des secondes informations de périodicité, et les secondes informations de périodicité sont utilisées pour indiquer une périodicité de collecte pour collecter des données relatives au vecteur de caractéristiques.

5. Dispositif d'analyse de données (301) selon l'une quelconque des revendications 1 à 4, dans lequel le dispositif d'analyse de données (301) est un élément de réseau d'analyse de données de réseau d'accès radio ou un élément de réseau d'analyse de données de réseau.

6. Procédé de fabrication de co-décision multi-modèles, dans lequel le procédé comprend :

la formation (S501), par un dispositif d'analyse de données (301), d'une pluralité de modèles d'apprentissage sur la base d'une pluralité d'algorithmes d'apprentissage combinatoire, la génération (S502) d'un message d'installation utilisé pour indiquer d'installer la pluralité de modèles d'apprentissage, et l'envoi (S5O3) du message d'installation à un autre dispositif d'analyse de données (302), de sorte que le message d'installation est utilisé pour déclencher l'installation de la pluralité de modèles d'apprentissage, dans lequel la pluralité de modèles d'apprentissage comprend un modèle primaire et un modèle secondaire, le message d'installation comprend des informations de description du modèle primaire, des informations de description du modèle secondaire et des informations de prise de décision de vote du vote sur des résultats de prédiction de la pluralité de modèles d'apprentissage dans lequel les informations de prise de décision de vote comprennent des informations de prise de décision de vote de procédé moyennes ou des informations de prise de décision sur la base de la quantité de vote ;
les informations de prise de décision de vote de procédé moyennes comprennent des informations de prise de décision de vote moyennes simples ou des informations de prise de décision moyennes pondérées ; et
les informations de décision sur la base d'une quantité de vote comprend des informations de prise de décision de vote majoritaire, une pluralité d'informations de prise de décision de vote ou des informations de prise de décision de vote pondérées.

7. Support de stockage lisible par ordinateur, comprenant une instruction, dans lequel, lorsque l'instruction est exécutée sur un ordinateur, l'ordinateur est activé pour effectuer le procédé selon la revendication 6.

FIG. 1

FIG. 2

FIG. 3

FIG. 4

| A first data analysis device trains a target service based on a combinatorial learning algorithm, to obtain a plurality of learning models | S501 |

| The first data analysis device generates, based on the obtained plurality of learning models, an installation message used to indicate to install the plurality of learning models | S502 |

| The first data analysis device sends the installation message to a second data analysis device | S503 |

FIG. 5

| A second data analysis device receives an installation message, and installs a plurality of learning models based on the installation message | S601 |

| The second data analysis device performs predictions based on the plurality of learning models, to obtain a prediction result of each of the plurality of learning models | S602 |

| The second data analysis device matches an execution policy with a target service based on the prediction result of each of the plurality of learning models and voting decision-making information | S603 |

FIG. 6

| First data analysis device 701 | Second data analysis device 702 |

Multi-model co-decision-making system 700

FIG. 7

First data analysis device 701

First processor 7011   First memory 7013

Bus

First communications
interface 7012

FIG. 8

Second data analysis device 702

Second processor 7021   Second memory 7023

Bus

Second communications
interface 7022

FIG. 9

**EP 3 739 811 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810310789
- US 2018005134 A1